# EUROPÄISCHE PATENTSCHRIFT

(11) **EP 1 527 983 B1**
(45) Veröffentlichungstag und Bekanntmachung des Hinweises auf die Patenterteilung: **21.03.2007**
(21) Anmeldenummer: 04024810.6
(22) Anmeldetag: 19.10.2004
(51) Int. Cl.: B62D 21/00

(54) **Bauteil mit in seinem Längsverlauf sich änderndem Profilquerschnitt**
Structural part with lengthwise changing cross-section .
Pièce de structure avec variation de section transversale longitudinalement .

(30) Priorität: 30.10.2003 DE 10350776
(43) Veröffentlichungstag der Anmeldung: 04.05.2005
(73) Patentinhaber: DaimlerChrysler AG, 70567 Stuttgart (DE)
(72) Erfinder: Adelmann, Thomas, 70794 Filderstadt (DE); Egidi, Alexander, 94365 Parkstetten (DE); Füller, Karl-Heinz, 89231 Neu-Ulm (DE); Rostek, Günter, 73733 Esslingen (DE)

(56) Entgegenhaltungen:
- EP-A- 0 555 744
- EP-A- 1 344 583
- US-A- 6 026 573

## Beschreibung

Die Erfindung betrifft ein Bauteil mit in seinem Längsverlauf sich änderndem Profilquerschnitt gemäß dem Oberbegriff des Patentanspruchs 1.

Hinreichend bekannt sind Bauteile mit langgestreckten Profilen, die aus in Bandform bereitgestelltem Ausgangsmaterial mit durchgehend gleichem Profilquerschnitt, insbesondere einem U-förmigen Profilquerschnitt, während des Walzprofilierens gebogen werden. Diese Bauteile erweisen sich für komplexe Fahrzeugtragstrukturen als ungeeignet.

Aus der Druckschrift DE 100 11 755 A1 ist ein Bauteil mit in seinem Längsverlauf sich änderndem Profilquerschnitt, insbesondere einem U-förmigen Profilquerschnitt, bekannt. Dieses Bauteil wird in einer Rollprofilieranlage hergestellt. Das Bauteil weist eine Basis und gegenüberliegende Stege auf, wobei ausgehend von einer Bauteilbasisbreite dessen Profilquerschnitt mindestens eine Aufweitung und mindestens eine Verjüngung aufweist. Auch solche Bauteile erweisen sich für einige komplexe Fahrzeugstrukturen als nicht ausreichend geeignet.

Aus der EP 1 344 583 A1 ist ein profiliertes Bauteil sowie ein Verfahren und eine Vorrichtung zu seiner Herstellung bekannt, das einen sich in Richtung seines Längsverlaufs ändernden Querschnitt und einen Flansch aufweist. Bauteile mit derartigen Querschnittsänderungen erweisen sich ebenfalls für komplexe Fahrzeugstrukturen als nicht ausreichend geeignet.

Der vorliegenden Erfindung liegt ausgehend von diesem Stand der Technik die Aufgabe zugrunde, ein besonders gut im Fahrzeugrohbau integrierbares formsteifes Bauteil bereitzustellen.

Diese Aufgabe wird erfindungsgemäß durch die Gesamtheit der Merkmale von Patentanspruch 1 gelöst. Vorteilhafte Weiterbildungen sind Gegenstand der Unteransprüche.

Die Erfindung betrifft ein unter Verwendung von Rollprofilieren profiliertes Bauteil mit in seinem Längsverlauf sich änderndem Profilquerschnitt, wobei das profilierte Bauteil einen Flansch aufweist und wobei der sich in seinem Längsverlauf ändernde Profilquerschnitt des profilierten Bauteils eine sich ändernde Bauteilbasisbreite aufweist.

Ein wesentlicher Vorteil des erfindungsgemäßen Bauteils ist seine Formsteifigkeit und seine gute Verbaubarkeit im Fahrzeugrohbau. Das Bauteil, das unter Verwendung von Rollprofilieren profiliert ist, weist sehr gute Struktureigenschaften sowohl im hochbeanspruchten Randbereich des Profilquerschnitts als auch im rollprofilierten Flansch auf. Diese erfindungsgemäßen Struktureigenschaften wirken sich positiv auf die Bauteilbeanspruchbarkeit insbesondere unter der Wirkung einer zyklischen Beanspruchung aus.

Ein Flansch in solchen Bauteilen ermöglicht eine bessere Integration des Bauteils durch Fügen, insbesondere durch Laserschweißen, gerade beim Anschweißen einer Bodengruppe an einen Längsträger. Es ist auch möglich, den Flansch des Bauteils unter Verwendung von Bördeln an andere Bauteile anzubinden, um den Rand des Flansches zu verstärken, das Bauteil zu versteifen oder glatte Begrenzungsflächen daran zu erzeugen, z.B. zum Fügen, Falzen, Verschrauben, Vernieten oder Verkleben.

Die Ausbildung eines Flansches hat zusätzlich den Vorteil, dass durch die größere Verbindungsfläche unterschiedlichste Fügetechniken bzw. -verfahren teilweise überhaupt erst eingesetzt werden können. Dies gewährleistet einen vielseitigen Einsatz solcher Bauteile an unterschiedlichen Positionen der Karosseriestruktur. Zusätzlich wird die Steifigkeit der gefügten Verbindung erhöht, was sich positiv auf die Gesamtsteifigkeit der Karosseriestruktur und auf das Fahrverhalten auswirkt.

Ein weiterer wesentlicher Vorteil des erfindungsgemäßen Bauteils ist seine erweiterte Anwendbarkeit als Struktur- und Sicherheitsbauteil im Fahrzeugrohbau. Unter Verwendung von Rollprofilieren kann das Bauteil aus hoch- und höherfesten Stählen, vorzugsweise mit einer Zugfestigkeit bis 1700 N/mm² hergestellt werden, die den Sicherheitsanforderungen im Kraftfahrzeugbau gerecht werden. In der Regel handelt es sich bei den Struktur- und Sicherheitsbauteilen um dünnwandige, aus Stahlblech gefertigte Säulenstrukturen, Längs- und Querprofile, wie z.B. Seitenaufprallträger, Stoßfänger, Säulenverstärkungen, Längs- und Querträger, Bodengruppe sowie Dachrahmen. Diese rollprofilierten Bauteile zeichnen sich durch eine hohe Maßhaltigkeit und geringe Fertigungstoleranzen aus.

In einer vorteilhaften Ausführungsform des erfindungsgemäßen Bauteils erstreckt sich der Flansch über die Länge des Bauteils, insbesondere über den Bereich der Profilquerschnittsänderung.

Insbesondere Bauteile für Karosseriestrukturen, beispielsweise Trägerstrukturen, müssen häufig an die vorliegende Einbausituation, insbesondere zur Anpassung an die Schweißverbindungsstelle, im Profilquerschnitt angepasst werden, so dass die Bauteile in Längsrichtung keinen konstanten Profilquerschnitt aufweisen können. Aus dem erfindungsgemäßen Bauteil werden Trägerstrukturen derart hergestellt, dass diese über die Länge einen Flansch aufweisen, wobei sich in Längsrichtung der Profilquerschnitt ändert. Ein Vorteil des erfindungsgemäßen Bauteils mit veränderlichem Profilquerschnitt und Flansch in Längsrichtung besteht darin, dass dieses Bauteil eingesetzt als A-, B-, C- und D-Säulenstruktur derart auf die Karosseriestruktur abgestimmt wird, dass bei einem Seitenaufprall von Beginn des Auftreffens auf die Säulenstruktur an, mehr Energie über den zur Verfügung stehenden Deformationsweg effizient von der Säulenstruktur absorbiert werden kann. Die Insassen werden damit vor stark verformten Säulenstrukturen geschützt.

In einer weiteren vorteilhaften Ausbildung ist das Bauteil aus höherfestem Stahl und/oder aus Tiefziehstahl und/oder aus einer Ti-Legierung und/oder aus einer Nickellegierung und/oder aus Leichtbaustahl und/oder einem metallhaltigen Kompositwerkstoff ausgebildet.

Ein Vorteil des erfindungsgemäßen Bauteils mit Flansch aus hoch- und/oder höherfestem Stahl ist eine Gewichtsreduzierung, die aufgrund der Steifigkeitserhöhung des Bauteils möglich wird. Neben einer Gewichtsreduzierung haben diese Werkstoffe den Vorteil, dass weniger Einbauraum benötigt wird und andererseits die steigenden Sicherheitsanforderungen im Kraftfahrzeugbau im Bereich von Struktur- und Sicherheitsbauteilen erfüllt werden können.

Insbesondere höherfeste Stähle (s.g. Leichtbaustähle), vorzugsweise aus der Gruppe der Mehrphasenstähle, wie beispielsweise Dualphasenstähle (DP-Stähle), Complexphasenstähle (CP-Stähle), Martensitphasenstähle (MS-W-Stähle) oder TRIP-Stähle (Transformation induced plasticity), eignen sich gut für Bauteile, die unter Verwendung von Rollprofilieren profiliert werden. Diese Stähle weisen besonders günstige Verfestigungseigenschaften, das sich in einem günstigen Umformbarkeits-Festigkeitsverhältnis widerspiegelt, auf. Die sehr hohe Verfestigung dieser Stähle bei hoher Ausgangsfestigkeit erweist sich besonders vorteilhaft für das Crash-Verhalten. Somit erlaubt das erfindungsgemäße Bauteil eine Steigerung der Festigkeit in gewünschten Bauteilbereichen, ohne dass beispielsweise eine kostenintensive Wärmebehandlung benötigt wird.

Alternativ oder additiv dazu können erfindungsgemäß Tiefziehstähle in Struktur- und Sicherheitsbauteilen zum Einsatz kommen, da sie neben einem niedrigen Kohlenstoff-Gehalt auch über ein feinkörniges, möglichst texturarmes Gefüge verfügen und eine Dehngrenze ohne Fließbereich aufweisen. Ein homogenes Gefüge im erfindungsgemäßen Bauteil hat den Vorteil, dass die Festigkeitseigenschaften der Basis, der Stege und der Flansche vergleichbar sind.

Obwohl Ti-Legierungen über einen höheren E-Modul als Stähle verfügen, können diese umformtechnisch mittels Rollprofilieren zu einem formsteifen Bauteil verarbeitet werden. Der höhere E-Modul wirkt sich positiv auf die Steifigkeit des umformtechnisch hergestellten Bauteils aus.

Es ist vorteilhaft metallhaltige Kompositwerkstoffe für Struktur- und Sicherheitsbauteile einzusetzen. Der Vorteil dieser Werkstoffe besteht darin, dass sie "maßgeschneidert" eingesetzt werden können. Verstärkungen sind deshalb nur in den gewünschten hochbeanspruchten Bauteilbereichen, wie z.B. an den Anbindungsstellen insbesondere im Bereich des Flansches notwendig.

In einer weiteren vorteilhaften Ausbildung weist der Flansch des Bauteils eine konstante Breite in Richtung seiner Längserstreckung auf.

Derart ausgestaltete Bauteile gewährleisten ein konstantes Flächenmoment und sind demnach vorzugsweise als Quer- oder Längsträger oder beispielsweise als Schweller in das Fahrzeug integrierbar.

Ein weiterer Vorteil dieser Bauteile bei denen der Flansch eine konstante Breite aufweist, ist die einfache und wirtschaftliche Herstellung. Die konstante Breite des Flansches ermöglicht, dass eine konstante Fügenaht mit einer gleichbleibend breiten Fügefläche auf das Bauteil einbringbar ist. Weiter erlaubt die konstante Breite des Flansches eine einfachere Weiterverarbeitung des Bauteils. Dies ermöglicht eine Verklebung, die durch die erfindungsgemäße Ausbildung des Flansches vereinfacht automatisierbar und/oder manuell durchführbar ist.

In einer weiteren vorteilhaften Ausgestaltung der Erfindung weist der Flansch des Bauteils eine reduzierte Breite im Bereich eines erweiterten Profilquerschnittes auf.

Vorteilhaft bei dem erfindungsgemäßen Bauteil mit Flansch, der eine variable Breite in Richtung seiner Längserstreckung, insbesondere eine reduzierte Breite im Bereich des erweiterten Querschnittes aufweist, besteht darin, dass bei dieser Ausgestaltung ein vor oder nach dem Rollprofilierprozess gegebenenfalls notwendiger Beschnitt der Ausgangsgeometrie dadurch entfällt. Beim Beschneiden werden in der Regel die überflüssigen Werkstoffbereiche von der Ausgangsgeometrie, wie beispielsweise Randstreifen entfernt, damit die Ausgangsgeometrie vor dem Rollprofilierprozess die gewünschten Maße aufweist. Somit entfällt der Verfahrensschritt Beschneiden bei der Herstellung des Bauteils und hierdurch werden die Fertigungszeiten und -kosten der Bauteile reduziert.

In einer weiteren vorteilhaften Ausgestaltung der Erfindung weist der Flansch des Bauteils eine größere Breite im Bereich eines erweiterten Profilquerschnittes auf.

Diese Ausgestaltung des erfindungsgemäßen Bauteils kommt besonders in Bereichen der Karosseriestruktur zum Einsatz, an denen hohe Anforderungen bezüglich der Steifigkeit gestellt werden. Das erfindungsgemäße Bauteil weist demnach in Bauteilbereichen die momentensteifer auszulegen sind, einen breiteren Flansch auf. Beispiele hierfür sind Stoßfänger- oder Dachrahmenkonstruktionen.

Das erfindungsgemäße Bauteil kann auch als eine Abschluss-Säule zum Einsatz kommen, wie beispielsweise als C- oder D-Säule. Durch den Flansch, der im Bereich des erweiterten Profilquerschnittes eine größere Breite aufweist, kann die Abschluss-Säule besonders gut an der Innenseite der Seitenwand angebunden werden. Unter Verwendung eines Bördelprozesses versteift der breitere Flansch den Rand des Bauteils, so dass dieser Bauteilbereich die eingebrachten Torsions- und Biegemomente unter reduzierten Deformationen aufnehmen kann und die Verwendung von zusätzlichen separaten Verstärkungselementen nicht notwendig ist.

In einer weiteren vorteilhaften Ausgestaltung ist in dem Bauteil mindestens eine Sicke vorgesehen, die seitlich in die Stege quer und/oder längs zu dem Längsverlauf des Bauteils einbringbar ist.

Ein Vorteil des erfindungsgemäßen Bauteils mit Sicken (geometrisch geformte Versteifungen), die gezielt in gewünschten Bauteilbereichen angeordnet sind, besteht darin, dass ein Beulen der Stege des Bauteils erst bei erhöhter Bauteilbeanspruchung eintritt, da eine Erhöhung der Steifigkeit des Bauteils durch die Sicken erfolgt.

In einer weiteren vorteilhaften Ausgestaltung ist in dem Bauteil mindestens eine Öffnung vorgesehen, derer Form und Größe derart ausgelegt ist, dass eine Elektrode einer Schweißzange durch die Öffnung ansetzbar ist.

Das Bauteil ist also so dimensioniert, dass eine Öffnung einbringbar ist, durch welche die Möglichkeit besteht, eine Elektrode einer Schweißzange hindurchzuführen. Somit ist es denkbar, dass die Elektrode an einer Innenseite einer A-, B-, C- oder D-Säulenstruktur des Fensterrahmens hindurchführbar ist, so dass beispielsweise an einer entsprechenden Außenseite des Fensterrahmens insbesondere zwei in unterschiedlichen Ebenen liegende Schweißpunktreihen anbringbar und dadurch auch andere Karosserieteile befestigbar sind.

Es ist weiterhin vorteilhaft das erfindungsgemäße Bauteil als Verstärkungselement, das in einer Abschluß-Säule, beispielsweise einer C- oder D-Säule angeordnet ist, mit mindestens einem Seitenrahmen und/oder einem Dachabschnitt zu verbinden.

Es ist auch vorteilhaft Öffnungen an den Stegen einzubringen, durch die elektrische Kabel hindurchführbar sind.

In einer weiteren vorteilhaften Ausgestaltung ist das Bauteil unter Verwendung vom kalten Umformen hergestellt.

Derart ausgestaltete Bauteile weisen gegenüber den mittels einer herkömmlichen Warmumformung hergestellten Bauteilen eine höhere Maßgenauigkeit auf, wodurch eine im kalten Zustand durchzuführende Kalibrierung der Bauteile entfällt. Ferner weisen Bauteile, die mittels einer Warmumformung hergestellt sind, Verzug und schlechtere Oberflächenqualität (Verzunderung) auf.

Beispielsweise müssen Träger der A-, B-, C-, oder D-Säulenstrukturen im Kraftfahrzeugbau mit hoher Qualität und mit hoher Maßgenauigkeit in hoher Stückzahl hergestellt werden. Das erfindungsgemäße Bauteil weist eine sehr gute Oberflächenqualität, hohe Maßhaltigkeit und eine bessere Verbaubarkeit im Rohbau auf.

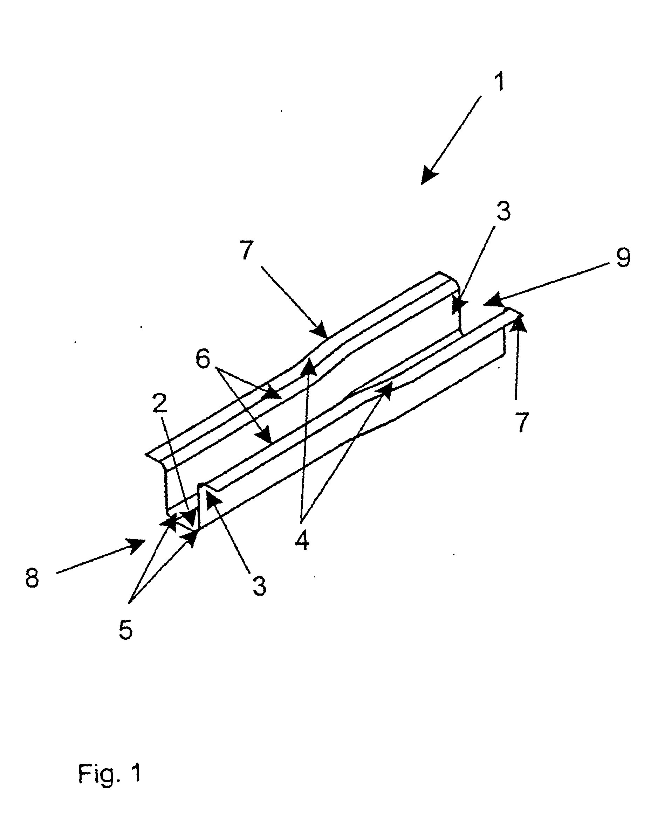

Nachfolgend wird anhand eines Ausführungsbeispiels und der Figur 1 der erfindungsgemäße Gegenstand näher erläutert. Hierbei gehen aus der Figur und ihrer Beschreibung weitere Merkmale und Vorteile der Erfindung hervor.

Dabei zeigt:
- Fig. 1: Eine schematische Darstellung des erfindungsgemäßen Bauteils

Die Fig. 1 stellt eine beispielhafte Ausführungsform des erfindungsgemäßen Bauteils 1 dar. Diese Form wird üblicherweise als "Hut- oder Omegaprofil" bezeichnet. Das Bauteil 1 ist aus TRIP-Stahl gebildet, das als Ausgangsmaterial in Form eines Coils vorliegt. Das Ausgangsmaterial wird im ebenen Zustand in einer Rollprofiliervorrichtung zu einem Bauteil 1 profiliert. Das rollprofilierte Bauteil 1 weist eine Basis 2 und einander gegenüberliegende Stege 3 mit Flanschen 4 auf. Diese Stege 3 gehen über Bogenbereiche 5 in die Basis 2 über. Ferner weist das Bauteil 1 einander gegenüberliegende, jeweils von den Stegen 3 ausgehende Flansche 4 auf, die rollprofiliert sind. Die Stege 3 gehen über Flanschbögen 6 in die Flansche 4 über. Die Flansche 4 enden an Kanten 7. Die Stege 3 sind so dimensioniert, dass Öffnungen einbringbar sind, die die Durchführung einer Elektrode einer Schweißzange oder von Elektrokabeln ermöglichen. Zusätzlich verfügen die Stege 3 über Sicken, hier nicht dargestellt, die quer zu dem Längsverlauf des Bauteils angeordnet sind und die Steifigkeit des Bauteils erhöhen.

Die Bauteilbasisbreite ändert sich in dem Längsverlauf des Bauteils 1 und weist eine Aufweitung 9 und eine Verjüngung 8 auf. Dabei zeichnen sich die Stege 3 mit einer konstanten Höhe und die Flansche 4 mit einer konstanten Breite über den Längsverlauf des Bauteils 1 aus.

Das erfindungsgemäße Bauteil bewirkt eine zusätzliche Versteifung der Karosseriestruktur, insbesondere in Bezug auf Biege- und Torsionsmomente. Besonders der Flansch des Bauteils führt dazu, dass das Bauteil in eine Vorzugsrichtung momentensteifer ausgeführt ist, weswegen die Verwendung von zusätzlichen separaten Verstärkungsbauteilen in diese Vorzugsrichtung entfallen kann.

Die Erfindung ist nicht nur auf die beschriebene Bauteilgeometrie beschränkt. Es ist auch denkbar, dass sich die Steghöhe über den Längsverlauf des Bauteils ändert. Des Weiteren besteht die Möglichkeit die Breite des Flansches derart variabel zu gestalten, dass die Breite des Flansches unabhängig von dem Profilquerschnitt verändert wird.

### Bezugszeichenliste

1- Bauteil
2- Basis
3- Steg
4- Flansch
5- Bogenbereich
6- Flanschbogen
7- Kante
8- Verjüngung der Bauteilbasisbreite
9- Aufweitung der Bauteilbasisbreite

## Patentansprüche

1. Unter Verwendung von Rollprofilieren profiliertes Bauteil (1) mit in seinem Längsverlauf sich änderndem Profilquerschnitt, wobei das profilierte Bauteil (1) einen Flansch (4) aufweist,
**dadurch gekennzeichnet,**
**dass** der sich in seinem Längsverlauf ändernde Profilquerschnitt des profilierten Bauteils (1) eine sich ändernde Bauteilbasisbreite aufweist.

2. Bauteil (1) nach Anspruch 1,
**dadurch gekennzeichnet,**
**dass** sich der Flansch (4) über die Länge des Bauteils (1) erstreckt, insbesondere über den Bereich der Profilquerschnittsänderung.

3. Bauteil (1) nach Anspruch 1 oder 2,
**dadurch gekennzeichnet,**
**dass** das Bauteil (1) aus höherfestem Stahl und/oder aus Tiefziehstahl und/oder aus einer Ti-Legierung und/oder aus einer Nickellegierung und/oder aus Leichtbaustahl und/oder einem metallhaltigen Kompositwerkstoff ausgebildet ist.

4. Bauteil (1) nach einem der Ansprüche 1 bis 3,
**dadurch gekennzeichnet,**
**dass** der Flansch (4) des Bauteils (1) eine konstante Breite in Richtung seiner Längserstreckung aufweist.

5. Bauteil (1) nach einem der Ansprüche 1 bis 3,
**dadurch gekennzeichnet,**
**dass** der Flansch (4) des Bauteils (1) eine reduzierte Breite im Bereich eines erweiterten Profilquerschnittes aufweist.

6. Bauteil (1) nach einem der Ansprüche 1 bis 3,
**dadurch gekennzeichnet,**
**dass** der Flansch (4) des Bauteils (1) eine größere Breite im Bereich eines erweiterten Profilquerschnittes aufweist.

7. Bauteil(1) nach einem der vorhergehenden Ansprüche,
**dadurch gekennzeichnet,**
**dass** in dem Bauteil (1) mindestens eine Öffnung vorgesehen ist, derer Form und Größe derart ausgelegt ist, dass eine Elektrode einer Schweißzange durch die Öffnung ansetzbar ist.

8. Bauteil (1) nach einem der vorhergehenden Ansprüche,
**dadurch gekennzeichnet,**
**dass** das Bauteil (1) unter Verwendung vom kalten Umformen hergestellt ist.

## Claims

1. Component (1) profiled by the application of roller profiling with a profile cross-section changing in its longitudinal extent, the profiled component (1) comprising a flange (4), **characterized in that** the profile cross-section, changing in its longitudinal extent, of the profiled component (1) has a changing component base width.

2. Component (1) according to Claim 1, **characterized in that** the flange (4) extends over the length of the component (1), in particular over the region of the change in the profile cross-section.

3. Component (1) according to Claim 1 or 2, **characterized in that** the component (1) is configured from higher strength steel and/or from deep drawn steel and/or from a titanium alloy and/or from a nickel alloy and/or from a lightweight steel and/or a metal-containing composite material.

4. Component (1) according to one of Claims 1 to 3, **characterized in that** the flange (4) of the component (1) has a uniform width in the direction of its longitudinal extent.

5. Component (1) according to one of Claims 1 to 3, **characterized in that** the flange (4) of the component (1) has a reduced width in the region of a widened profile cross-section.

6. Component (1) according to one of Claims 1 to 3, **characterized in that** the flange (4) of the component (1) has a greater width in the region of a widened profile cross-section.

7. Component (1) according to one of the preceding claims, **characterized in that** in the component (1) at least one opening is provided, of which the shape and size is designed such that an electrode of a welding gun may be applied through the opening.

8. Component (1) according to one of the preceding claims, **characterized in that** the component (1) is produced by the application of cold forming.

## Revendications

1. Pièce de construction profilée en utilisant des profilés roulés (1) et présentant une section transversale variable sur son extension longitudinale, cette pièce de construction profilée (1) comportant une bride (4),
**caractérisée en ce que**
la section transversale variable sur son extension longitudinale de la pièce de construction profilée (1) a une largeur de base de pièce de construction variable.

2. Pièce de construction (1) selon la revendication 1,
**caractérisée en ce que**
la bride (4) s'étend sur la largeur de la pièce de construction (1), notamment sur la zone de la variation de section transversale du profilé.

3. Pièce de construction (1) selon la revendication 1 ou 2,
**caractérisée en ce que**
la pièce de construction (1) est composée d'acier à haute résistance et/ou d'acier embouti et/ou d'un alliage de Ti et/ou d'un alliage de nickel et/ou d'acier de construction léger et/ou d'un matériau composite contenant du métal.

4. Pièce de construction (1) selon l'une quelconque des revendications 1 à 3,
**caractérisée en ce que**
la bride (4) de la pièce de construction (1) a une largeur constante en direction, de son extension longitudinale.

5. Pièce de construction (1) selon l'une quelconque des revendications 1 à 3,
**caractérisée en ce que**
la bride (4) de la pièce de construction (1) a une largeur réduite au niveau d'une section transversale élargie du profilé.

6. Pièce de construction (1) selon l'une quelconque des revendications 1 à 3,
**caractérisée en ce que**
la bride (4) de la pièce de construction (1) a une largeur supérieure au niveau d'une section transversale élargie du profilé.

7. Pièce de construction (1) selon l'une quelconque des revendications précédentes,
**caractérisée en ce que**
il est prévu dans la pièce de construction (1) au moins un orifice dont la forme et la taille sont conçues de manière à ce qu'une électrode d'une pince à souder puisse être insérée à travers l'orifice.

8. Pièce de construction (1) selon l'une quelconque des revendications précédentes,
**caractérisée en ce que**
la pièce de construction (1) est fabriquée en mettant en oeuvre une déformation à froid.
